# EUROPEAN PATENT SPECIFICATION

(11) **EP 1 970 593 B1**
(45) Date of publication and mention of the grant of the patent: **08.12.2010**
(21) Application number: 08004623.8
(22) Date of filing: 12.03.2008
(51) Int. Cl.: F16F 9/06, F16F 9/20

(54) **Hydraulic shock absorber**
Hydraulischer Stoßdämpfer
Amortisseur hydraulique

(30) Priority: 12.03.2007 JP 2007061559
(43) Date of publication of application: 17.09.2008
(73) Proprietor: Yamaha Hatsudoki Kabushiki Kaisha, Shizuoka-ken Shizuoka 438-8501 (JP)
(72) Inventor: Sawai, Seiji, Iwata-shi Shizuoka-ken 438-8501 (JP); Yamazaki, Yutaka, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 381 188
- EP-A- 1 054 185
- DE-A1- 4 431 626
- JP-A- 11 165 521
- US-A- 4 099 602

## Description

This invention relates to a hydraulic shock absorber suspended between a wheel side which is one part of a shock-absorbed body and a vehicle-body side which is another part of the shock-absorbed body, for absorbing an impact force applied to the shock-absorbed body in case that the shock-absorbed body is, for example, a suspension system of an automobile.

One conventional hydraulic shock absorber is disclosed in Patent Document 1 below. According to the disclosed publication, the hydraulic shock absorber is a single-rod type including: a cylinder tube connected to one part of a shock-absorbed body which is a suspension system of an automobile; a free piston fitted in the cylinder tube slidably in the axial direction for dividing the cylinder tube into an oil chamber filled with hydraulic oil and a gas chamber filled with high-pressure gas; a piston fitted in the oil chamber slidably in the axial direction for dividing the oil chamber into a first and second oil chambers; a piston rod projecting from the piston and extending to the outside of the cylinder tube through the first oil chamber located opposite to the gas chamber with its extension end being connected to another part of the shock-absorbed body; and a damping force generator for generating a damping force with the hydraulic oil flowing between the first and second oil chambers.

In the above case, the gas chamber and the gas filled in the gas chamber function as an oil chamber pressurizing means for normally pressurizing the hydraulic oil in the first and second oil chambers. With the oil chamber pressurizing means, occurrence of such a problem that bubbles are generated in the hydraulic oil due to the negative pressure in the first and second oil chambers when the shock absorber is operated or the volume of the hydraulic oil varies with temperature change can be prevented. Thereby, damping characteristics of the shock absorber can be maintained better.

A shock absorber adapted to a suspension system of an automobile is generally configured as follows. That is, the cylinder tube is connected to the wheel side and the extension end of the piston rod is connected to the vehicle-body side via a rubber mount. A suspension spring is provided between the cylinder tube and the vehicle-body side for urging the shock absorber for its extension movement.

Here, each of axial end surfaces of the piston is a pressure receiving surface which receives pressure of the hydraulic oil. In the single-rod type shock absorber described above, of the both pressure receiving surfaces, the pressure receiving area of one pressure receiving surface is larger than that of another pressure receiving surface from which the piston rod projects by the sectional area of the piston rod. Therefore, as described above, when the hydraulic oil is normally pressurized by pressure of the gas of the oil chamber pressurizing means, the piston is urged in an extending direction of the piston rod by an urging force (R), which is a pressurized reaction force generated by the pressure of the hydraulic oil based on the oil chamber pressurizing means and the difference of the pressure receiving area described above. As a result, the single-rod type shock absorber has characteristics that normally make the extension movement in the free state.

Therefore, in the above automobile, the vehicle-body side weight (W) corresponding to the shock absorber is supported on the wheel side by the spring reaction force (F) of the suspension spring and is also supported on the wheel side by the urging force (R) of the oil chamber pressurizing means via the piston, the piston rod, and the rubber mount on the shock absorber (W=F+R). In this case, the urging force (R) urges the rubber mount upward. Therefore, for example, when the automobile is in a stationary state, an initial elastic deformation appears on the rubber mount in the upward pulling direction caused by the urging force (R).

Here, when the shock absorber makes a compression or extension movement with an impact force under conditions described above while the automobile is driven, it is preferable that the rubber mount makes elastic deformation with elasticity uniform as much as possible (desired elastic deformation) in each type of operation.

Considering the rubber mount as a single part without being provided with the shock absorber, the rubber mount is designed to obtain such rubber mount characteristics that when an upward load is applied, the rubber mount softly makes elastic deformation in the pulling direction, while when a downward load is provided, the rubber mount stiffly makes elastic deformation in the compression direction. Thus, a lot of efforts are made so that the rubber mount with the "desired elastic deformation" would be obtained in each of compression or extension movement of the shock absorber described above under the condition that the initial elastic deformation appears on the rubber mount caused by the urging force (R) in the stationary state of the automobile.

Meanwhile, another conventional hydraulic shock absorber is disclosed in Patent Document 2 below. According to the disclosed publication, the hydraulic shock absorber is a double-rod type including: a cylinder tube connected to one part of a shock-absorbed body; a piston fitted in the cylinder tube slidably in an axial direction thereof for dividing the cylinder tube into a first and second oil chambers; a main piston rod extending from the piston to the outside of the first oil chamber through the first oil chamber with its extension end being connected to another part of the shock-absorbed body; a sub piston rod extending from the piston to the outside of the second oil chamber through the second oil chamber; an oil chamber pressurizing means for normally pressurizing hydraulic oil in the first and second oil chambers; and a damping force generator for generating a damping force with the hydraulic oil flowing between the first and second oil chambers.

Patent Document 1: JP-A-2004-232845

Patent Document 2: JP-A-Hei11-165521

Recently, in a single-rod type shock absorber adapted to a suspension system of an automobile described in Patent Document 1, there is a case that the diameter of the piston rod in this shock absorber is required to be increased by the reason of capacity and strength. When the diameter of the piston rod is increased, the urging force (R) increases in the rate of the increased area.

However, even though the urging force (R) in the shock absorber increases, it is not easy to obtain desired rubber mount characteristics for achieving the "desired elastic deformation" on the rubber mount due to limitation of the construction of the rubber mount and limitation in strength. Therefore, under the above situation, it is practically very difficult to achieve the "desired elastic deformation."

Meanwhile, there may be a case that a shock absorber is changed to a double-rod type described in Patent Document 2 on a single-rod type shock absorber adapted to a suspension system of an automobile described in Patent Document 1 with the rubber mount unchanged.

However, in the pistons on the double-rod type shock absorber, each piston rod extends from each axial end surface to the outside of each cylinder tube. Accordingly, the pressure receiving area of each pressure receiving surface of the piston becomes generally equal. Therefore, though the oil chamber pressurizing means normally pressurizes the hydraulic oil, the urging force (R), which is a pressurized reaction force of the gas is not generated. As a result, the piston is not urged to either of axial directions together with each piston rod. That is, the double-rod type shock absorber does not have characteristics that make the extension movement in the free state.

Therefore, as described above, when a double-rod type shock absorber is applied to a suspension system of an automobile to which a single-rod type shock absorber should be adapted, the vehicle-body side weight (W) is supported to the wheel side only by the spring reaction force (F) by the suspension spring and no urging force (R) as on the single-rod type shock absorber is applied to the rubber mount. Therefore, the rubber mount stays in the free state and the initial elastic deformation generated by adapting the single-rod type shock absorber does not occur.

As a result, for example, when an impact force is applied to the shock absorber in its axial direction thereby making the compression movement while the automobile is running on a flat road, the rubber mount first starts to deform elastically from the free state, and the elastic deformation proceeds to reach the initial elastic deformation state and then the rubber mount exhibits damping characteristics similar to those of the single-rod type shock absorber for the first time.

Therefore, in case that the double-rod type shock absorber is adapted instead of the single-rod type shock absorber with the rubber mount unchanged, a time lag occurs in generating a damping force, which makes the rubber mount characteristics unsuitable. This may cause deterioration of the riding comfort of the automobile and therefore is not preferable.

Document DE-A-4431626 discloses an hydraulic shock absorber according to the preamble of claim 1.

The present invention has been made in view of the foregoing situation and the object of the invention is to provide a hydraulic shock absorber which easily adjusts the urging force for urging a shock absorber so that the shock absorber normally makes an extension movement in the free state and thereby improves adaptation flexibility of the shock absorber in such a manner that the shock absorber can be easily adapted to any rubber mounts with various rubber mount characteristics such as, for example, a rubber mount that has rubber mount characteristics suitable for a single-rod type shock absorber in a suspension system on an automobile.

This object is solved in an inventive manner by a hydraulic shock absorber comprising: a cylinder tube connected to one part of a shock-absorbed body; a piston fitted into the cylinder tube slidably in an axial direction thereof for dividing the cylinder tube into first and second oil chambers; a main piston rod extending from the piston to the outside of the first oil chamber through the first oil chamber, the main piston rod having an extension end being connected to another part of the shock-absorbed body; an oil chamber pressurizing means for pressurizing an hydraulic oil in the first and second oil chambers; a sub piston rod extending from the piston to the outside of the second oil chamber through the second oil chamber; and a sealed space for accommodating an extension end of the sub piston rod, wherein a gas having a pressure larger than atmospheric pressure and smaller than a pressure applied on the hydraulic oil by the oil chamber pressurizing means is provided in the sealed space.

According to a preferred embodiment, the hydraulic shock absorber further comprises a damping force generator for generating a damping force with the hydraulic oil flowing between the first and second oil chambers.

According to a further preferred embodiment, the hydraulic shock absorber further comprises an injection valve for achieving injection or discharge of the gas in or from the sealed space.

Preferably, the cylinder tube includes: a tube body extending in an axial direction thereof; a fixed rod guide fixed to the tube body in such a manner that an end opening in the first oil chamber positioned opposite to the piston is closed, the main piston rod slidably passing through the fixed rod guide; and a movable rod guide slidably fitted in the tube body in an axial direction thereof in such a manner that an end opening in the second oil chamber positioned opposite to the piston is closed, the sub piston rod slidably passing through the movable rod guide, and wherein a solid spring as the oil chamber pressurizing means for normally urging the movable rod guide toward the first and second oil chambers side is provided in the sealed space.

Further, preferably the cylinder tube includes: a tube body extending in an axial direction thereof; a fixed rod guide fixed to the tube body in such a manner that an end opening in the first oil chamber positioned opposite to the piston is closed, and main piston rod slidably passing through the fixed rod guide; and another fixed rod guide fixed to the tube body in such a manner that an end opening in the second oil chamber positioned opposite to the piston is closed, the sub piston rod slidably passing through the other fixed rod guide, and wherein an accumulator as the oil chamber pressurizing means is provided for normally pressurizing the hydraulic oil in the first and second oil chambers by a pressure of another gas.

In the following, the present invention is explained in greater detail with respect to several embodiments thereof in conjunction with the accompanying drawings, wherein:
- FIG. 1: is a side sectional and partially broken view, showing a shock absorber as a first embodiment,
- FIG. 2: is a view corresponding to FIG. 1, showing a second embodiment,
- FIG. 3: is a view corresponding to FIG. 1, showing a third embodiment,
- FIG. 4: is a view corresponding to FIG. 1, showing a fourth embodiment, and
- FIG. 5: is a view corresponding to FIG. 1, showing a fifth embodiment.

### Description of Reference Numerals and Symbols:

1: shock absorber
2: shock-absorbed body
3: one part
4: other part
5: rubber mount
6: axis
7: cylinder tube
8: hydraulic oil
9: first oil chamber
10: second oil chamber
11: piston
12: main piston rod
12a: extension end
13: sub piston rod
13a: extension end
14: fastener
15: oil chamber pressurizing means
16: tube body
17: fixed rod guide
18: movable rod guide
21: connector
30: suspension spring
33: extension side damping force generator
37: compression side damping force generator
46: sealed space
47: gas
48: lid
49: plug
50: O-ring
53: through hole
54: injection valve
58: spring
59: sliding member
66: other gas
67: accumulator
A: extension movement
B: compression movement
S: cross sectional area
W: vehicle-body side weight
F: spring reaction force
R': urging force

Relating to a hydraulic shock absorber of the present teaching, the following is a best mode for carrying out the teaching in order to achieve such an object that easily adjusts the urging force for urging a shock absorber so that the shock absorber normally makes an extension movement in the free state and thereby improves adaptation flexibility of the shock absorber.

That is, a hydraulic shock absorber includes: a cylinder tube connected to one part of a shock-absorbed body; a piston fitted in the cylinder tube slidably in an axial direction thereof for dividing the cylinder tube into a first and second oil chambers; a main piston rod extending from the piston to the outside of the first oil chamber through the first oil chamber with its extension end being connected to another part of the shock-absorbed body; a sub piston rod extending from the piston to the outside of the second oil chamber through the second oil chamber; an oil chamber pressurizing means for normally pressurizing hydraulic oil in the first and second oil chambers; and a damping force generator for generating a damping force with the hydraulic oil flowing between the first and second oil chambers. A sealed space for containing an extension end of the sub piston rod is defined. Gas having a pressure larger than atmospheric pressure and smaller than a pressure applied on the hydraulic oil by the oil chamber pressurizing means is filled in the sealed space.

### First Embodiment:

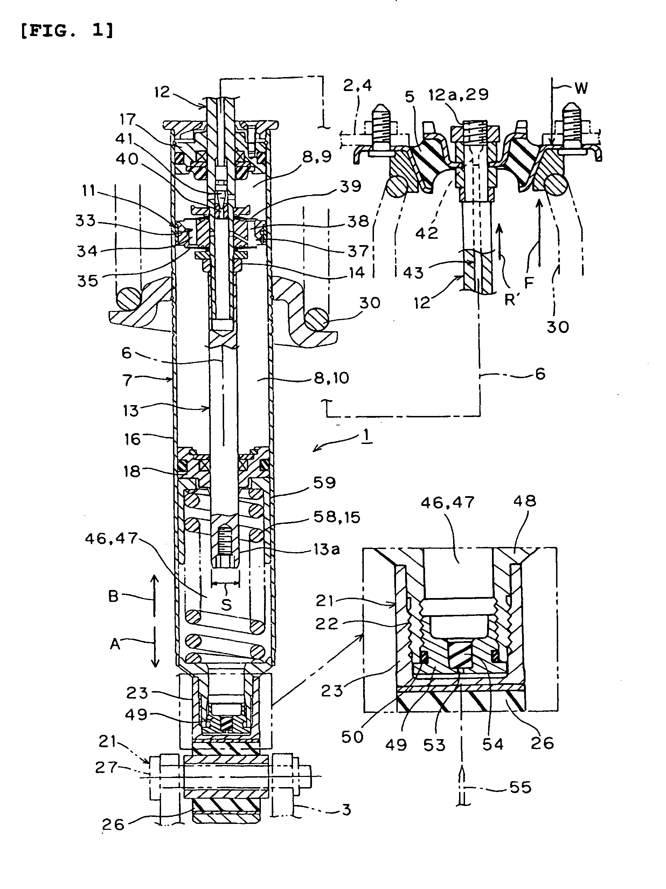

Description will be hereinafter made of a first embodiment of the present teaching in detail with reference to FIG. 1 of the accompanying drawings.

In FIG. 1, reference numeral 1 denotes a double-rod type hydraulic shock absorber. The shock absorber 1 is suspended between one part 3 and another part 4 of a shock-absorbed body 2. The shock-absorbed body 2 is, for example, a suspension system of a vehicle such as an automobile and a motorcycle. The one part 3 is a wheel side and the other part 4 is a vehicle-body side. The shock absorber 1 and the other part 4 are connected with each other by a rubber mount 5 interposed therebetween.

The shock absorber 1 includes: a cylinder tube 7 connected to the one part 3 of the shock-absorbed body 2 with its axis 6 extending vertically; a piston 11 fitted in one end (upper end) of the cylinder tube 7 slidably in an axial direction thereof for dividing the cylinder tube 7 into a first and second oil chambers 9, 10 filled with hydraulic oil 8; a main piston rod 12 extending from the piston 11 to the outside of the first oil chamber 9 through the first oil chamber 9 with its extension end 12a being connected to the other part 4 of the shock-absorbed body 2; a sub piston rod 13 extending from the piston 11 to the outside of the second oil chamber 10 through the second oil chamber 10; a fastener 14 for detachably fixing a proximal side of the sub piston rod 13 to the piston 11; and an oil chamber pressurizing means 15 for normally pressurizing the hydraulic oil 8 in the first and second oil chambers 9, 10.

The main and sub piston rods 12, 13 have a generally same diameter. Therefore, when each axial end surface of the piston 11 receives pressure from the hydraulic oil 8 in the first and second oil chambers 9, 10, the pressure receiving area faced to the hydraulic oil 8 of each end surface of the piston 11 becomes generally equal.

The cylinder tube 7 includes: a cylindrical tube body 16 extending in an axial direction thereof; a fixed rod guide 17 fixed to the tube body 16 in such a manner that an end opening in the first oil chamber 9 positioned opposite to the piston 11 is closed, the main piston rod 12 slidably passing through the fixed rod guide 17; and a movable rod guide 18 slidably fitted in the tube body 16 in such a manner that an end opening in the second oil chamber 10 positioned opposite to the piston 11 is closed, the sub piston rod 13 slidably passing through the movable rod guide 18.

The lower end of the cylinder tube 7 is pivotally supported via a connector 21 on the one part 3 of the shock-absorbed body 2. The connector 21 includes: a connector body 23 detachably engaged with a male thread 22 formed at the lower end of the tube body 16; a known absorbing body 26 pressed into a round hole formed in the connector body 23; and a pivot shaft 27 inserted by the absorbing body 26 for enabling the one part 3 of the shock-absorbed body 2 and the cylinder tube 7 to pivotally support each other.

On the other hand, the extension end 12a of the main piston rod 12 is connected to the other part 4 of the shock-absorbed body 2 by a fastener 29 via the rubber mount 5. Considering the rubber mount 5 as a single part without being provided with the shock absorber 1, the rubber mount 5 has such rubber mount characteristics that when an upward load is applied to the rubber mount 5, the rubber mount 5 softly makes elastic deformation in the pulling direction, while when a downward load is applied, the rubber mount 5 stiffly makes elastic deformation in the compression direction.

The shock absorber 1 can make an extension movement A and a compression movement B by the piston 11 sliding relative to the cylinder tube 7. A suspension spring 30 is interposed between the other part 4 of the shock-absorbed body 2 and the cylinder tube 7 to enable the shock absorber 1 to make the extension movement A.

An extension side damping force generator 33 is provided for generating a damping force by flowing the hydraulic oil 8 from the first oil chamber 9 to the second oil chamber 10, when the shock absorber 1 makes the extension movement A. The extension side damping force generator 33 includes an extension side oil passage 34 formed in the piston 11 for communicating the first oil chamber 9 with the second oil chamber 10 and an extension side damping valve 35, which is a leaf valve, attached to the piston 11 to be opened or closed resiliently for closing the extension side oil passage 34 from the second oil chamber 10 side.

On the other hand, when the shock absorber 1 makes the compression movement B, a compression side damping force generator 37 is provided for generating a damping force by flowing the hydraulic oil 8 from the second oil chamber 10 to the first oil chamber 9. The compression side damping force generator 37 includes: a compression side oil passage 38 formed in the piston 11 for communicating the first oil chamber 9 with the second oil chamber 10; and a compression side damping valve 39, which is a leaf valve, attached to the piston 11 to be opened or closed resiliently for closing the compression side oil passage 38 from the first oil chamber 9 side.

The extension side damping force generator 33 and the compression side damping force generator 37 each include as a common component: another oil passage 40 formed between the piston rod 11 and the main piston rod 12 for communicating the first oil chamber 9 with the second oil chamber 10; an adjustment valve 41, which is a needle valve, fitted in a hole formed on the axis 6 of the main piston rod 12 for adjusting an opening degree of a part of the other oil passage 40 in the main piston rod 12; an engaging operation part 42 in a plug shape screwed on the extension end 12a of the piston rod 12 and to be engaged with a tool; and an operation shaft 43 inserted in the hole formed on the axis 6 of the main piston rod 12. The opening degree of the other oil passage 40 can be adjusted by the adjustment valve 41 in conjunction with an operation by the tool on the engaging operation part 42 via the operation shaft 43.

A sealed space 46 for containing an extension end 13a of the sub piston rod 13 is defined. Nitrogen gas 47 is filled, of which pressure (0.5 -0.8 Mpa) is larger than atmospheric pressure and smaller than a pressure (approximately 2 Mpa) applied on the hydraulic oil 8 by the oil chamber pressurizing means 15. Filling and pressure adjustment of the gas 47 are generally carried out in the assembling process of the shock absorber 1 on an assembly line of the shock absorber 1. However, the shock absorber 1 may be adjusted in its assembly form without disassembling components of the shock absorber 1 after assembling the shock absorber 1 as described below.

Specifically, the extension end 13a of the sub piston rod 13 is disposed inside the lower part of the cylinder tube 7. A lid 48 with a small diameter in a cylindrical shape is fixed to the lower end of the cylinder tube 7. A plug 49 is screwed in an opening of the lid 48 on the axis 6. Thereby, the opening of the lid 48 is controlled to be opened or closed. An O-ring 50 provides a seal between an inner surface of the opening of the lid 48 and the plug 49. Thereby, the sealed space 46 is defined inside the lower part of the cylinder tube 7.

A through hole 53 is formed in the plug 49 on the axis 6. An injection valve 54 made of rubber block is secured from the sealed space 46 side for closing the through hole 53. The injection valve 54 allows for injection or discharge of the gas 47 in or from the sealed space 46.

injection or discharge of the gas 47 for the sealed space 46 is performed with a needle-shaped injector 55 which can be inserted in the injection valve 54. The injection or discharge of the gas 47 is performed in the state that the cylinder tube 7 is separated from the connector 21. Pressure of the gas 47 at the injector 55 can be detected by a pressure gauge and thereby pressure of the gas 47 in the sealed space 46 can be adjusted to a desired pressure value.

As the oil chamber pressurizing means 15, a solid spring 58 for normally urging the movable rod guide 18 toward the first and second oil chambers 9, 10 side and a cylindrical sliding member 59 interposed between the movable rod guide 18 and the solid spring 58 in the axial direction of the cylinder tube 7, through which the sub piston rod 13 extends are provided. The spring 58 is a coil spring made of metal or plastic positioned on the axis 6 and interposed between the lid 48 and the sliding member 59.

The sliding member 59 is fitted with no play in the tube body 16 to be slidable in the axial direction. The movable rod guide 18 side end surface of the sliding member 59 is formed to cross the axis 6 perpendicularly and is in surface contact with an axial end surface of the movable rod guide 18.

Therefore, even though an axial end surface of the spring 58 abutting on the other end surface of the sliding member 59 slightly slants from the perpendicular plane to the axis in the free state of the spring 58, slanting of the sliding member 59 with respect to the axis 6 due to the urging force of the spring 58 can be prevented. Accordingly, the movable rod guide 18 abutting on the one end surface of the sliding member 59 is also prevented from slanting with respect to the axis 6 due to the urging force of the spring 58. As a result, smooth sliding of the movable rod guide 18 with the tube body 16 can be ensured.

In case that an external impact force is provided to the shock absorber 1 in its axial direction when the vehicle is driven, the shock absorber 1 makes the extension movement A by an urging force of the suspension spring 30. Then, the hydraulic oil 8 in the first oil chamber 9 flows to the second oil chamber 10 through the extension side oil passage 34 of the extension side damping force generator 33. At this time, the extension side damping valve 35 elastically deforms to open the valve with hydraulic pressure generated by the hydraulic oil 8 in the first oil chamber 9 exceeding an elastic urging force of the extension side damping valve 35. The hydraulic oil 8 then flows with elastic resistance from the extension side damping valve 35 through the extension side oil passage 34 which is opened as described above. This flow generates the damping force which absorbs the impact force.

On the other hand, the shock absorber 1 with the impact force makes the compression movement B against the urging force of the suspension spring 30.Then, the hydraulic oil 8 in the second oil chamber 10 flows to the first oil chamber 9 through the compression side oil passage 38 of the compression side damping force generator 37. At this time, the compression side damping valve 39 elastically deforms to open the valve with hydraulic pressure generated by the hydraulic oil 8 in the second oil chamber 10 exceeding an elastic urging force of the compression side damping valve 39. The hydraulic oil 8 then flows with elastic resistance from the compression side damping valve 39 through the compression side oil passage 38 which is opened as described above. This flow generates the damping force which absorbs the impact force.

When the shock absorber 1 makes the extension movement A or the compression movement B as described above, the hydraulic oil 8 flows between the first and second oil chambers 9, 10 through the other oil passage 40. These flows also generate the damping force which absorbs the impact force. In this case, the damping force generated by the extension movement A or the compression movement B of the shock absorber 1 can be adjusted by adjusting the opening degree of the other oil passage 40 with the adjustment valve 41 by the operation of the engaging operation part 42.

Incidentally, the hydraulic oil 8 in the first and second oil chambers 9, 10 is normally pressurized by the urging force of the spring 58 via the movable rod guide 18. Thereby, occurrence of such a problem that bubbles are generated in the hydraulic oil 8 due to the negative pressure in the first and second oil chambers 9, 10 when the shock absorber 1 is operated or the volume of the hydraulic oil 8 varies with temperature change can be prevented. Thereby, damping characteristics of the shock absorber 1 can be maintained better.

In the above construction, the sealed space 46 for containing the extension end 13a of the sub piston rod 13 is defined and the gas 47 having a pressure larger than atmospheric pressure and smaller than the pressure applied on the hydraulic oil 8 by the oil chamber pressurizing means 15, is filled in the sealed space 46.

Therefore, an urging force (R') is provided to the extension end 13a of the sub piston rod 13 contained in the sealed space 46 based on values of the cross sectional area S of the sub piston rod 13 and the pressure of the gas 47. Accordingly, for example, when the diameters of the main piston rod 12 and the sub piston rod 13 are set larger in order to change capacity and strength of the shock absorber 1, the urging force (R') can be adjusted to a relatively small value by decreasing the pressure of the gas 47 on the other hand. That is, according to the above embodiment, the urging force (R') for urging the shock absorber 1 to normally make the extension movement in its free state can be easily adjusted only by adjusting the pressure of the gas 47 in the sealed space 46. Thereby, adaptation flexibility of the shock absorber 1 can be advantageously improved.

As described above, the pressure of the gas 47 filled in the sealed space 46 is smaller than the pressure applied on the hydraulic oil 8 by the oil chamber pressurizing means 15. Accordingly, fine adjustments of the urging force (R') can be easily achieved by varying the pressure of the gas 47.

According to the shock absorber 1, in the automobile, the vehicle-body side weight (W), which is the other part 4 corresponding to the shock absorber 1, is supported on the wheel side, which is the one part 3 on the automobile, by the spring reaction force (F) of the suspension spring 30 and is also supported on the wheel side by the urging force (R') (R'< R described above) generated by the pressure of the gas 47 via the piston 11, the main piston rod 12, and the rubber mount 5 on the shock absorber 1 (W=F+R').In this case, the urging force (R') urges the rubber mount 5 upward. Therefore, for example, when the automobile is in a stationary state, an initial elastic deformation appears on the rubber mount 5 in the upward pulling direction caused by the urging force (R').

When an impact force is applied to the shock absorber 1 in its axial direction while the automobile is driven, the shock absorber 1 makes the extension movement A or the compression movement B under the conditions described above. For example, when an impact force is applied to the shock absorber 1 in its axial direction thereby making the compression movement B while the automobile is running on a flat road, the urging force (R') generates the initial elastic deformation on the rubber mount 5. As a result, the spring reaction force of the rubber mount 5 rapidly responds to the compression movement B and the piston 11 responsively slides in the cylinder tube 7. Accordingly, the hydraulic oil 8 responsively flows between the first and second oil chambers 9, 10 through the damping force generators 33, 37. Thereby, this flow generates the damping force which absorbs the impact force. This function is similar to that in case that the single-rod type shock absorber is adapted.

As a result, according to the shock absorber 1, the rubber mount 5 with all types of rubber mount characteristics such as, for example, a rubber mount 5 that has rubber mount characteristics suitable for a single-rod type shock absorber 1 in a suspension system on an automobile can be easily adapted to the shock absorber 1.

Also, as described above, the injection valve 54 is provided for achieving injection or discharge of the gas 47 in or from the sealed space 46.

Therefore, injection or discharge of the gas 47 in or from the sealed space 46 can be easily achieved by the injection valve 54. Thereby, adjustment of the pressure of the gas 47 in the sealed space 46 can be further easily achieved. Accordingly, fine adjustments of the urging force for urging the shock absorber 1 to normally make the extension movement can be easily achieved, thereby further improving adaptation flexibility of the shock absorber 1.

As described above, the cylinder tube 7 includes: the tube body 16 extending in an axial direction thereof; the fixed rod guide 17 fixed to the tube body 16 in such a manner that an end opening in the first oil chamber 9 positioned opposite to the piston 11 is closed, the main piston rod 12 slidably passing through the fixed rod guide 17; and a movable rod guide 18 slidably fitted in the tube body 16 in an axial direction thereof in such a manner that an end opening in the second oil chamber 10 positioned opposite to the piston 11 is closed, the sub piston rod 13 slidably passing through the movable rod guide 18. Also, as the oil chamber pressurizing means 15, the solid spring 58 for normally urging the movable rod guide 18 toward the first and second oil chambers 9, 10 side is provided in the sealed space 46.

Therefore, the shock absorber 1 can be constructed simply by using the solid spring 58, which has a simple construction and has no possibility of fluid leak, as the oil chamber pressurizing means 15.

The spring 58 is disposed in the sealed space 46.

Thus, the sealed space 46 for containing the gas 47 is utilized for locating the spring 58, thereby making the shock absorber 1 compact.

The above description is based on the illustrated sample. However, the shock absorber 1 may constructed to be upside down and may be disposed horizontally or aslant. Also, the damping force generator may be a fixed orifice or the like provided outside the cylinder tube 7. The sealed space 46 may be defined separately from the cylinder tube 7. injection or discharge of the gas 47 in or from the sealed space 46 may be performed only on an assembly line and may be inhibited for the user to perform by omitting to provide the injection valve 54 for example.

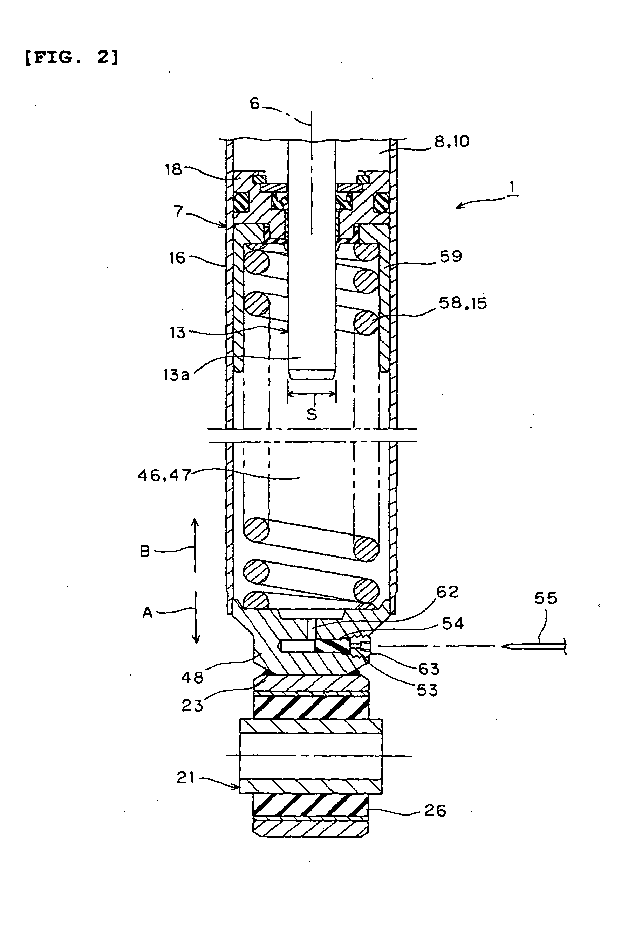

FIGs. 2 to 5 illustrate second to fifth embodiments of the present teaching. The components, functions and effects of these embodiments are similar in many respects to those of the first embodiment above. Therefore, those parts corresponding to the components in the first embodiment are identified with the same reference numerals and symbols in the drawings and their description is not repeated, and their differences are mainly described below. The structures of the parts of the embodiments may be combined in various ways in the light of the objects and effects of the present teaching.

### Second Embodiment:

For the purpose of describing the present teaching in further detail, the second embodiment is described with reference to FIG. 2 attached hereto.

In FIG. 2, the lid 48 is fixed to the lower end of the cylinder tube 7 in order to close the opening thereof. A connector body 23 of the connector 21 is fixed to the lid 48. A gas passage 62 is formed in the lid 48 for communicating the outside and inside of the sealed space 46.

The injection valve 54 is pressed into the gas passage 62 at the outside end of the sealed space 46 and a plug 63 formed with the through hole 53 is detachably screwed in the end opening of the gas passage 62. A hole axis of the through hole 53 is generally perpendicular to the axis 6.

### Third Embodiment:

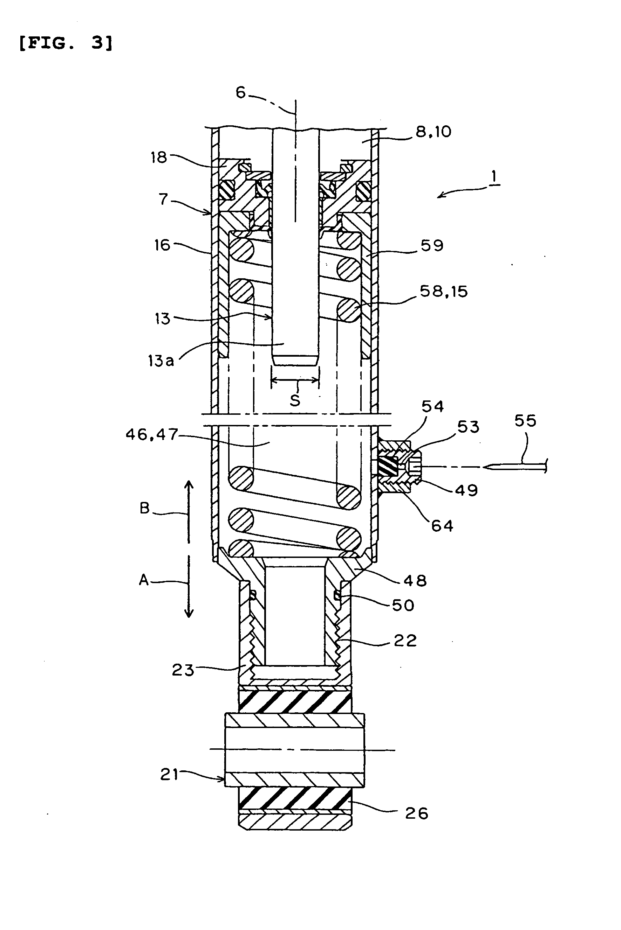

Description will be hereinafter made of the third embodiment in detail with reference to FIG. 3 attached hereto.

In FIG. 3, a hole is formed on a lower wall of the cylinder tube 7 which defines the sealed space 46. A socket 64 is fixed on the lower sidewall to be communicated with the hole. The injection valve 54 is pressed into the socket 64 and a plug 49 formed with the through hole 53 is screwed to the socket 64. A hole axis of the through hole 53 is generally perpendicular to the axis 6.

### Fourth Embodiment:

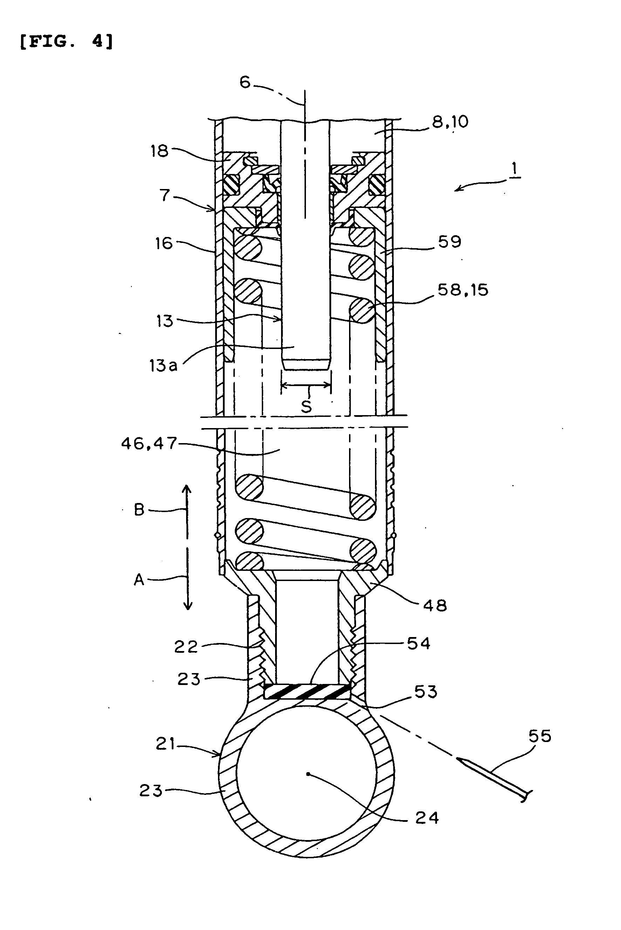

Description will be hereinafter made of the fourth embodiment in detail with reference to FIG. 4 attached hereto.

In FIG. 4, the through hole 53 is formed in the connector body 23 and the injection valve 54 is sandwiched between the lid 48 and the connector body 23 of the connector 21. The injection valve 54 provides a seal between the lid 48 and the connector body 23. A hole axis of the through hole 53 extends obliquely upward toward the injection valve 54.

### Fifth Embodiment:

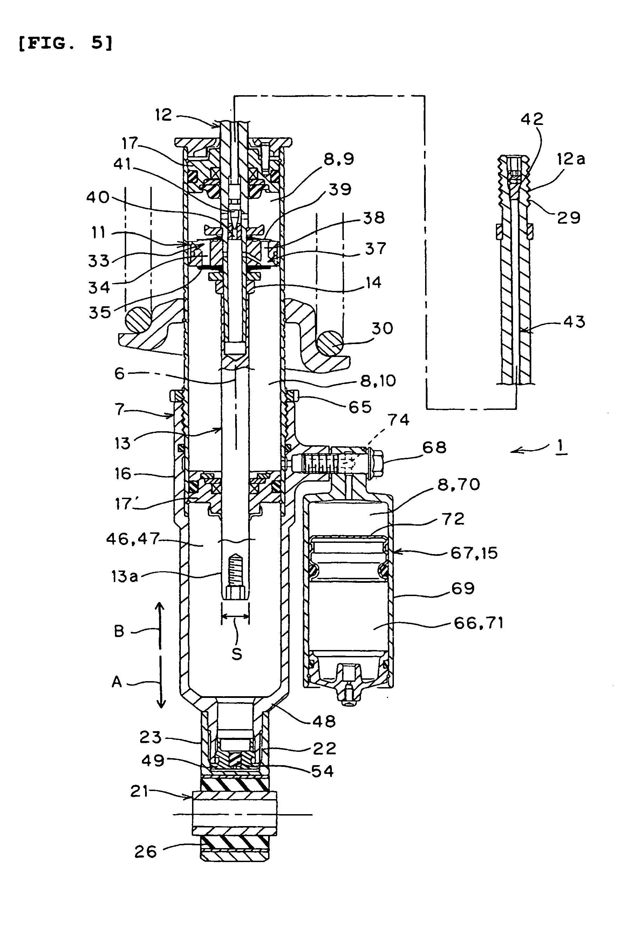

Description will be hereinafter made of the fifth embodiment in detail with reference to FIG. 5 attached hereto.

In FIG. 5, tube body 16 is separated into an upper and lower tube. Separated ends thereof are engaged with each other and fixed by a fastener 65. The movable rod guide 18 in the first embodiment is replaced with another fixed rod guide 17' which instead is fixed on the tube body 16. An accumulator 67 is provided for normally pressurizing the hydraulic oil 8 in the first and second oil chambers 9, 10 with another gas 66 as the oil chamber pressurizing means 15. The accumulator 67 is fixed to the cylinder tube 7 by a fastener 68.

The accumulator 67 includes another cylinder tube 69 provided outside the cylinder tube 7 and a free piston 72 slidably fitted in the cylinder tube 69 in an axial direction thereof for dividing the cylinder tube 69 into an oil chamber 70 and a gas chamber 71. The oil chamber 70 is filled with the hydraulic oil 8 and communicated with the second oil chamber 10 through an oil passage 74 formed in a bolt of the fastener 68. The other gas 66, which is high-pressure (approximately 2 Mpa) nitrogen gas, is contained in the gas chamber 71 and pressurizes the hydraulic oil 8 in the first and second oil chambers 9, 10 via the free piston 72.

With the above construction, the pressure which normally pressurizes the hydraulic oil 8 can be easily adjusted by adjusting the pressure of the other gas 66 in the accumulator 67, thereby easily obtaining the suitable shock absorber 1.

As shown in all the accompanying drawings, the description discloses, according to a preferred first aspect, a hydraulic shock absorber including: a cylinder tube 7 connected to one part 3 of a shock-absorbed body 2; a piston 11 fitted in the cylinder tube 7 slidably in an axial direction thereof for dividing the cylinder tube 7 into a first and second oil chambers 9, 10; a main piston rod 12 extending from the piston 11 to the outside of the first oil chamber 9 through the first oil chamber 9, the main piston rod 12 having an extension end 12a being connected to another part 4 of the shock-absorbed body 2; a sub piston rod 13 extending from the piston 11 to the outside of the second oil chamber 10 through the second oil chamber 10; an oil chamber pressurizing means 15 for normally pressurizing a hydraulic oil 8 in the first and second oil chambers 9, 10; and damping force generators 33, 37 for generating a damping force with the hydraulic oil 8 flowing between the first and second oil chambers 9, 10, in which a sealed space 46 for containing an extension end 13a of a sub piston rod 13 is defined and gas 47 having a pressure larger than atmospheric pressure and smaller than a pressure applied on the hydraulic oil 8 by the oil chamber pressurizing means 15, is filled in the sealed space 46.

As shown in all the accompanying drawings, the description discloses, according to a preferred second aspect, an hydraulic shock absorber in which an injection valve 54 is provided for achieving injection or discharge of the gas 47 in or from the sealed space 46.

As shown in FIGs. 1 to 4, the description above discloses, according to a preferred third aspect, a hydraulic shock absorber in which the cylinder tube 7 includes: a tube body 16 extending in an axial direction thereof; a fixed rod guide 17 fixed to the tube body 16 in such a manner that an end opening in the first oil chamber 9 positioned opposite to the piston 11 is closed, the main piston rod 12 slidably passing through the fixed rod guide 17; and a movable rod guide 18 slidably fitted in the tube body 16 in an axial direction thereof in such a manner that an end opening in the second oil chamber 10 positioned opposite to the piston 11 is closed, the sub piston rod 13 slidably passing through the movable rod guide 18, and in which a solid spring 58 as the oil chamber pressurizing means 15 for normally urging the movable rod guide 18 toward the first and second oil chambers 9, 10 side is provided in the sealed space 46.

As shown in FIG. 5, the description above discloses, according to a preferred fourth aspect, a hydraulic shock absorber in which the cylinder tube 7 includes: a tube body 16 extending in an axial direction thereof; a fixed rod guide 17 fixed to the tube body 16 in such a manner that an end opening in the first oil chamber 9 positioned opposite to the piston 11 is closed, the main piston rod 12 slidably passing through the fixed rod guide 17; and another fixed rod guide 17' fixed to the tube body 16 in such a manner that an end opening in the second oil chamber 10 positioned opposite to the piston 11 is closed, the sub piston rod 13 slidably passing through the other fixed rod guide 17', and in which an accumulator 67 as the oil chamber pressurizing means 15 is provided for normally pressurizing the hydraulic oil 8 in the first and second oil chambers 9, 10 by a pressure of another gas 66.

It should be noted that the reference numerals and symbols appended to the terms referred to in this section do not limit the scope of the teaching to any one of preferred embodiments and appended drawings to be described later.

### Effects of the Aspects:

The effects of the present aspects are described below:

The hydraulic shock absorber, according to the first preferred aspect, includes: a cylinder tube connected to one part of a shock-absorbed body; a piston fitted in the cylinder tube slidably in an axial direction thereof for dividing the cylinder tube into a first and second oil chambers; a main piston rod extending from the piston to the outside of the first oil chamber through the first oil chamber with its extension end being connected to another part of the shock-absorbed body; a sub piston rod extending from the piston to the outside of the second oil chamber through the second oil chamber; an oil chamber pressurizing means for normally pressurizing hydraulic oil in the first and second oil chambers; and a damping force generator for generating a damping force with the hydraulic oil flowing between the first and second oil chambers, in which a sealed space for containing an extension end of the sub piston rod is defined and gas having a pressure lager than atmospheric pressure and smaller than a pressure applied on the hydraulic oil by the oil chamber pressurizing means is filled in the sealed space.

Therefore, an urging force is applied to the extension end of the sub piston rod contained in the sealed space based on values of the cross sectional area of the sub piston rod and the pressure of the gas. Accordingly, for example, when the diameters of the main piston rod and the sub piston rod are set larger in order to change capacity and strength of the shock absorber, the urging force can be adjusted to a relatively small value by decreasing the pressure of the gas on the other hand. That is, according to the present teaching, the urging force can be easily adjusted so that the shock absorber normally makes the extension movement in its free state only by adjusting the pressure of the gas in the sealed space. Thereby, adaptation flexibility of the shock absorber can be advantageously improved.

As described above, the pressure of the gas filled in the sealed space is smaller than the pressure applied on the hydraulic oil by the oil chamber pressurizing means. Accordingly, fine adjustments of the urging force can be easily achieved by varying the pressure of the gas.

As a result, according to the shock absorber, the rubber mount with all types of rubber mount characteristics such as, for example, a rubber mount that has rubber mount characteristics suitable for a single-rod type shock absorber in a suspension system on an automobile can be easily adapted to the shock absorber.

According to the second preferred aspect, there is provided an injection valve for achieving injection or discharge of the gas in or from the sealed space.

Therefore, injection or discharge of the gas in or from the sealed space can be easily achieved by the injection valve. Thereby, adjustment of the pressure of the gas in the sealed space can be further easily achieved. Accordingly, fine adjustments of the urging force for urging the shock absorber in order to normally make the extension movement can be easily achieved, thereby further improving adaptation flexibility of the shock absorber.

According to the third preferred aspect, there is provided a cylinder tube including: a tube body extending in an axial direction thereof; a fixed rod guide fixed to the tube body in such a manner that an end opening in the first oil chamber positioned opposite to the piston is closed, the main piston rod slidably passing through the fixed rod guide; and a movable rod guide slidably fitted in the tube body in such a manner that an end opening in the second oil chamber positioned opposite to the piston is closed, the sub piston rod slidably passing through the movable rod guide, and provides a solid spring as the oil chamber pressurizing means for normally urging the movable rod guide toward the first and second oil chambers side in the sealed space.

Therefore, the shock absorber can be constructed simply by using the solid spring, which has a simple construction and has no possibility of fluid leak, as the oil chamber pressurizing means.

The spring is disposed in the sealed space as described above.

Thus, the sealed space for containing the gas is utilized for locating the spring, thereby making the shock absorber compact.

According to the preferred fourth aspect, there is provided a cylinder tube including: a tube body extending in the an direction thereof; a fixed rod guide fixed to the tube body in such a manner that an end opening in the first oil chamber positioned opposite to the piston is closed, the main piston rod slidably passing through the fixed rod guide; and another fixed rod guide fixed to the tube body in such a manner that an end opening in the second oil chamber positioned opposite to the piston is closed, the sub piston rod slidably passing through the other fixed rod guide, and provides an accumulator for normally pressurizing the hydraulic oil in the first and second oil chambers by the pressure of another gas as the oil chamber pressurizing means.

Therefore, the pressure which normally pressurizes the hydraulic oil can be easily adjusted by adjusting the pressure of the other gas in the accumulator, thereby easily obtaining a suitable shock absorber.

Thus, according to the first preferred aspect, there is provided a hydraulic shock absorber comprising: a cylinder tube connected to one part of a shock-absorbed body; a piston fitted into the cylinder tube slidably in an axial direction thereof for dividing the cylinder tube into a first and second oil chambers; a main piston rod extending from the piston to the outside of the first oil chamber through the first oil chamber, the main piston rod having an extension end being connected to another part of the shock-absorbed body; a sub piston rod extending from the piston to the outside of the second oil chamber through the second oil chamber; an oil chamber pressurizing means for normally pressurizing an hydraulic oil in the first and second oil chambers; and a damping force generator for generating a damping force with the hydraulic oil flowing between the first and second oil chambers, wherein a sealed space for containing an extension end of the sub piston rod is defined and a gas having a pressure lager than atmospheric pressure and smaller than a pressure applied on the hydraulic oil by the oil chamber pressurizing means is filled in the sealed space.

Preferably, an injection valve is provided for achieving injection or discharge of the gas in or from the sealed space.

Further, preferably the cylinder tube includes: a tube body extending in an axial direction thereof; a fixed rod guide fixed to the tube body in such a manner that an end opening in the first oil chamber positioned opposite to the piston is closed, the main piston rod slidably passing through the fixed rod guide; and a movable rod guide slidably fitted in the tube body in an axial direction thereof in such a manner that an end opening in the second oil chamber positioned opposite to the piston is closed, the sub piston rod slidably passing through the movable rod guide, and wherein a solid spring as the oil chamber pressurizing means for normally urging the movable rod guide toward the first and second oil chambers side is provided in the sealed space.

Alternatively, the cylinder tube may include: a tube body extending in an axial direction thereof; a fixed rod guide fixed to the tube body in such a manner that an end opening in the first oil chamber positioned opposite to the piston is closed, and main piston rod slidably passing through the fixed rod guide; and another fixed rod guide fixed to the tube body in such a manner that an end opening in the second oil chamber positioned opposite to the piston is closed, the sub piston rod slidably passing through the other fixed rod guide, and wherein an accumulator as the oil chamber pressurizing means is provided for normally pressurizing the hydraulic oil in the first and second oil chambers by a pressure of another gas.

According to a particularly preferred embodiment, in order to achieve such an object that easily adjusts the urging force for urging a shock absorber so that the shock absorber normally makes an extension movement in the free state and thereby improves adaptation flexibility of the shock absorber, there is provided a shock absorber 1 which includes: a cylinder tube 7 connected to one part 3 of a shock-absorbed body 2; a main piston rod 12 extending from a piston 11 with its extension end 12a being connected to another part 4 of the shock-absorbed body 2; a sub piston rod 13 extending from the piston 11; an oil chamber pressurizing means 15 for normally pressurizing a hydraulic oil 8; and damping force generators 33, 37 for generating a damping force with the hydraulic oil 8 flowing between a first and second oil chambers 9, 10. A sealed space 46 for containing an extension end 13a of the sub piston rod 13 is defined. Gas 47 having a pressure larger than atmospheric pressure and smaller than a pressure applied on the hydraulic oil 8 by the oil chamber pressurizing means 15, is filled in the sealed space 46.

## Claims

1. Hydraulic shock absorber (1) comprising:
a cylinder tube (7) connected to one part (3) of a shock-absorbed body (2);
a piston (11) fitted into the cylinder tube slidably in an axial direction thereof for dividing the cylinder tube into first and second oil chambers (9,10);
a main piston rod (12) extending from the piston (11) to the outside of the first oil chamber (9) through the first oil chamber (9), the main piston rod (12) having an extension end (12a) being connected to another part (4) of the shock-absorbed body (2);
an oil chamber pressurizing means (15) for pressurizing an hydraulic oil in the first and second oil chambers (9,10);
a sub piston rod (13) extending from the piston (11) to the outside of the second oil chamber (10) through the second oil chamber (10); and
a sealed space (46) for accommodating an extension end (13a) of the sub piston rod (13), **characterised in that** a gas (7) having a pressure larger than atmospheric pressure and smaller than a pressure applied on the hydraulic oil by the oil chamber pressurizing means (15) is provided in the sealed space.

2. Hydraulic shock absorber according to claim 1, further comprising a damping force generator (33,37) for generating a damping force with the hydraulic oil flowing between the first and second oil chambers (9,10).

3. Hydraulic shock absorber according to claim 1 or 2, further comprising an injection valve for achieving injection or discharge of the gas in or from the sealed space.

4. Hydraulic shock absorber according to one of the claims 1 to 3, wherein the cylinder tube includes: a tube body extending in an axial direction thereof; a fixed rod guide fixed to the tube body in such a manner that an end opening in the first oil chamber positioned opposite to the piston is closed, the main piston rod slidably passing through the fixed rod guide; and a movable rod guide slidably fitted in the tube body in an axial direction thereof in such a manner that an end opening in the second oil chamber positioned opposite to the piston is closed, the sub piston rod slidably passing through the movable rod guide, and wherein a solid spring as the oil chamber pressurizing means for normally urging the movable rod guide toward the first and second oil chambers side is provided in the sealed space.

5. Hydraulic shock absorber according to one of the claims 1 to 3, wherein the cylinder tube includes: a tube body extending in an axial direction thereof; a fixed rod guide fixed to the tube body in such a manner that an end opening in the first oil chamber positioned opposite to the piston is closed, and main piston rod slidably passing through the fixed rod guide; and another fixed rod guide fixed to the tube body in such a manner that an end opening in the second oil chamber positioned opposite to the piston is closed, the sub piston rod slidably passing through the other fixed rod guide, and wherein an accumulator as the oil chamber pressurizing means is provided for normally pressurizing the hydraulic oil in the first and second oil chambers by a pressure of another gas.

## Patentansprüche

1. Hydraulischer Stoßdämpfer (1), aufweisend:
ein Zylinderrohr (7), verbunden mit einem Teil (3) eines Stoß- absorbierenden Körpers (2);
einen Kolben (11), eingesetzt in das Zylinderrohr, gleitbar in einer axialen Richtung desselben, um das Zylinderrohr in erste und zweite Ölkammern (9, 10) zu trennen;
eine Hauptkolbenstange (12), die sich von dem Kolben (11) nach außerhalb der ersten Ölkammer (9) durch die erste Ölkammer (9) erstreckt, wobei die Hauptkolbenstange (12) ein verlängertes Ende (12a) hat, das mit einem weiteren Teil (4) des Stoß- absorbierenden Körpers (2) verbunden ist;
eine Ölkammer- Druckeinrichtung (15) um ein Hydrauliköl in den ersten und zweiten Ölkammern (9, 10) unter Druck zu setzen;
einer Nebenkolbenstange (13), die sich von dem Kolben (11) nach außerhalb der zweiten Ölkammer (10) durch die zweite Ölkammer (10) erstreckt; und
einen abgedichteten Raum (46) zum Unterbringen eines Verlängerungsendes (13a) der Nebenkolbenstange (13), **dadurch gekennzeichnet, dass** ein Gas (7) mit einem Druck größer als der Atmosphärendruck und kleiner als ein Druck, aufgebracht auf das Hydrauliköl durch die Ölkammer- Druckeinrichtung (15), in dem abgedichteten Raum vorgesehen ist.

2. Hydraulischer Stoßdämpfer nach Anspruch 1, außerdem aufweisend einen Dämpfungskrafterzeuger (33, 37) zum Erzeugen einer Dämpfungskraft mit dem Hydrauliköl, das zwischen den ersten und zweiten Ölkammern (9, 10) fließt.

3. Hydraulischer Stoßdämpfer nach Anspruch 1 oder 2, außerdem aufweisend ein Einspritzventil zum Erreichen einer Einspritzung in den oder einem Ausströmen von Gas aus dem abgedichteten Raum.

4. Hydraulischer Stoßdämpfer nach einem der Ansprüche 1 bis 3, wobei das Zylinderrohr enthält: einen Rohrkörper, der sich in einer axialen Richtung desselben erstreckt; eine feststehende Stangenführung, befestigt an dem Rohrkörper in solch einer Weise, dass ein Ende, das sich in die erste Kammer öffnet, positioniert gegenüberliegend zu dem Kolben, geschlossen ist, wobei die Hauptkolbenstange gleitbar durch die feststehende Stangenführung hindurchgeht; und eine bewegbare Stangenführung, gleibar eingesetzt in den Rohrkörper in der axialen Richtung desselben in solch einer Weise, dass ein Ende, das sich in die zweite Ölkammer öffnet, positioniert gegenüberliegend zu dem Kolben, geschlossen ist, wobei die Nebenkolbenstange gleitbar durch die bewegbare Stangenführung hindurchgeht; und eine feste Feder als die Ölkammerdruckeinrichtung zum normalen Drücken der bewegbaren Stangenführung in Richtung zur Seite der ersten und zweiten Ölkammer in dem abgedichteten Raum vorgesehen ist.

5. Hydraulischer Stoßdämpfer nach einem der Ansprüche 1 bis 3, wobei das Zylinderrohr enthält: einen Rohrkörper, der sich in einer axialen Richtung desselben erstreckt; eine feststehende Stangenführung, befestigt an dem Rohrkörper in solch einer Weise, dass ein Ende, das sich in die erste Kammer öffnet, positioniert gegenüberliegend zu dem Kolben, geschlossen ist, und eine Hauptkolbenstange gleitbar durch die feststehende Stangenführung hindurchgeht; und eine weitere feststehende Stangenführung, befestigt an dem Rohrkörper in solch einer Weise, dass ein Ende, das sich in die zweite Ölkammer öffnet, positioniert gegenüberliegend zu dem Kolben, geschlossen ist, die Nebenkolbenstange gleitbar durch die andere feststehende Stangenführung hindurchgeht und wobei ein Speicher als die Ölkammerdruckeinrichtung zum normalen Drücken des Hydrauliköls in die ersten und zweiten Ölkammern durch einen Druck eines weiteren Gases vorgesehen ist.

## Revendications

1. Amortisseur hydraulique (1) comprenant :
un tube formant cylindre (7) relié à un élément (3) d'un corps amorti (2) ;
un piston (11) ajusté de manière coulissante dans le tube formant cylindre dans une direction axiale de ce dernier pour diviser le tube formant cylindre en première et seconde chambres d'huile (9,10) ;
une tige de piston principale (12) s'étendant à partir du piston (11) à l'extérieur de la première chambre d'huile (9) à travers la première chambre d'huile (9), la tige de piston principale (12) présentant une extrémité d'extension (12a) reliée à un autre élément (4) du corps amorti (2) ;
un moyen de pressurisation de chambre d'huile (15) pour pressuriser un liquide hydraulique dans les première et seconde chambres d'huile (9, 10) ;
une tige de piston secondaire (13) s'étendant à partir du piston (11) à l'extérieur de la seconde chambre d'huile (10) à travers la seconde chambre d'huile (10) ; et
un espace scellé (46) pour loger une extrémité d'extension (13a) de la tige de piston secondaire (13), **caractérisé en ce qu'**un gaz (7) ayant une pression supérieure à la pression atmosphérique et inférieure à une pression appliquée sur le liquide hydraulique par le moyen de pressurisation de chambre d'huile (15) est prévu dans l'espace scellé.

2. Amortisseur hydraulique selon la revendication 1, comprenant en outre un générateur de force d'amortissement (33, 37) pour produire une force d'amortissement avec le liquide hydraulique s'écoulant entre les première et seconde chambres d'huile (9, 10).

3. Amortisseur hydraulique selon la revendication 1 ou 2, comprenant en outre une soupape d'injection pour réaliser l'injection ou la décharge du gaz dans ou en provenance de l'espace scellé.

4. Amortisseur hydraulique selon l'une des revendications 1 à 3, dans lequel le tube formant cylindre inclut : un corps de tube s'étendant dans une direction axiale de ce dernier ; un guide de tige fixe fixé au corps de tube de telle sorte qu'une ouverture d'extrémité dans la première chambre d'huile positionnée en face du piston est fermée, la tige de piston principale passant de manière coulissante à travers le guide de tige fixe ; et un guide de tige mobile ajusté de manière coulissante dans le corps de tube dans une direction axiale de ce dernier de telle sorte qu'une ouverture d'extrémité dans la seconde chambre d'huile positionnée en face du piston est fermée, la tige de piston secondaire passant de manière coulissante à travers le guide de tige mobile, et dans lequel un ressort plein en tant que moyen de pressurisation de chambre d'huile pour presser normalement le guide de tige mobile vers le côté des première et seconde chambres d'huile est prévu dans l'espace scellé.

5. Amortisseur hydraulique selon l'une des revendications 1 à 3, dans lequel le tube formant cylindre inclut : un corps de tube s'étendant dans une direction axiale de ce dernier ; un guide de tige fixe fixé au corps de tube de telle sorte qu'une ouverture d'extrémité dans la première chambre d'huile positionnée en face du piston est fermée, et une tige de piston principale passant de manière coulissante à travers le guide de tige fixe ; et un autre guide de tige fixe fixé au corps de tube de telle sorte qu'une ouverture d'extrémité dans la seconde chambre d'huile positionnée en face du piston est fermée, la tige de piston secondaire passant de manière coulissante à travers l'autre guide de tige fixe, et dans lequel un accumulateur en tant que moyen de pressurisation de chambre d'huile est prévu pour pressuriser normalement le liquide hydraulique dans les première et seconde chambres d'huile par une pression d'un autre gaz.
